# EUROPEAN PATENT APPLICATION

(11) **EP 3 392 539 A1**
(43) Date of publication of application: **24.10.2018**
(21) Application number: 18167449.0
(22) Date of filing: 16.04.2018
(51) Int. Cl.: F16K 31/06, F25B 41/06, F16K 27/02

(54) **SOLENOID VALVE FOR FLOW CONTROL AND REFRIGERATION SYSTEM COMPRISING SAID VALVE**

(30) Priority: 20.04.2017 BR 102017008306
(71) Applicant: Whirlpool S.A., 04578-000 São Paulo - SP (BR)
(72) Inventor: LILIE, Dietmar Erich Bernhard, 89204-060 Joinville (BR)
(74) Representative: Soldatini, Andrea

(57) **Abstract**

A solenoid valve assembly for flow control, includes a main body (10) and a secondary body (20); a coil (30) arranged within the main body (10); at least one inlet path (11) and at least one outlet path (21); a valve seat (40) physically associated to the main body (10) and to the secondary body (20). In order to perform the interface between these, the valve seat (40), in combination with at least the secondary body (20), defines an airtight chamber (41). At least one movable member (42) is arranged within the airtight chamber (41); the at least one movable member (42) comprising at least one ferromagnetic portion, so as to be attracted or repelled as a function of the magnetic field generated by the coil (30), so that the movable member (42) is able to move. The at least one inlet path (11) communicates with the airtight chamber (41) by at least one inlet opening (12); the at least one movable member (42) being co-operative with the at least one inlet opening (12) in order to open or close it. The valve seat (40) comprises a lower wall (45) including a magnetic conducting portion (451) and a magnetic barrier portion (452); the magnetic barrier portion being able to deflect the magnetic flux that passes through the lower wall (45) of the valve seat (40) towards the movable member (42). It is also described a refrigeration system comprising such a valve assembly.

## Description

### Field of the Invention

The present invention refers to a refrigeration system and, principally, to a valve assembly for flow control in a refrigeration system which is controllable, fast actuation, low electric consumption, high durability and able to provide a gain of efficiency in refrigeration systems.

### Fundamentals of the Invention

As known to those skilled in the art, solenoid-controllable valves are widely known and have a wide range of possible applications, especially in fields related to fluid flow regulation, wherein often their fast actuation and accurate control are relevant factors to be considered in the design of these components. Examples of applications of this type of valve are the fuel injection valves of internal combustion engines and refrigeration compressors and/or the refrigeration circuits themselves.

Generally, the solenoid-controllable valves comprise a coil which is formed by a coiled wire, so that when an electric current passes through this wire, said current generates a force of attraction or repulsion, causing the movable portion of the valve is moved toward or away from a channel that is sealing, thereby providing for its opening and/or closing.

In such valves, the actuation response time is given in function of several factors, such as the mass of the movable portion of the valve, the electric current that passes through the coil and, consequently, the dissipated electric power, the design of the air gap, among others.

Solenoid-controllable valves known from the state of the art are basically divided into two groups: those of rotary motion and those of linear motion, most of which are bi-stable (stable in the open position and in the closed position); wherein both depend on a drive sequence, which makes them slow and applicable mainly in solutions that perform a low number of cycles, thus comprising low reliability to operate in a large number of cycles.

In view of this scenario, some solutions of the state of the art are already aimed at the design of a solenoid-controllable valve having a fast actuation, since such a factor, depending on the application in question, may be of paramount importance.

It is mentioned, for example, the solution of document US 4,905,962, which describes about a fast switching electromagnetic solenoid valve which includes an electromagnet comprising a pole surface inclined at an angle towards the valve plate to define a wedge-shaped air gap therebetween, so that the total valve stroke is decreased except in the vicinity of the valve seat (wherein it is defined the channel to be sealed), and consequently so that the acceleration of that valve is optimized at the beginning of the its actuation. In particular, it is further observed that the flux of the magnetic field in the arrangement proposed by this document apparently occurs through the housing and the body defining the pole surface, the shape of which also resembles a wedge. In this way, it can be seen that the aforementioned document, despite providing a fast actuation valve, it does not worry about providing an optimal path for the magnetic flux for purposes of saving electric consumption.

Another solution related to the fast actuation of a solenoid valve is found in document US 2014 225018, which in turn describes a valve assembly comprising a coil accommodated in a main body, a movable member configured to regulate the passage of fluid through a channel, said movable member being physically associated with an armature, said armature having magnetic and non-magnetic parts, wherein the magnetic part of the armature allows this to be attracted and/or repelled when the coil is energized and generates a magnetic field, and also wherein the non-magnetic parts are provided in minimal quantity for fixing the armature together with the main body of the valve assembly so as not to impair the magnetic flux by the armature. Said document, therefore, shows some concern about the path to be traveled by the magnetic flux, so that it is able to attract / repel the movable member of the valve that provides the seal of a certain channel, which is one of the foci to be addressed by the present invention. However, the solution of US 2014 225018 can still be optimized from the point of view of magnetic flux, as well as from the point of view of design, since it does not provide a compact solution, among other reasons.

In parallel, and with reference to the arrangements and constructions of refrigeration systems, specifically, it is pointed out that various possible arrangements are already known from the state of the art. In a simpler arrangement, a refrigeration system is sequentially composed of a compressor which compresses and pumps a working fluid (coolant fluid) through a compression mechanism, a condenser that provides the release of heat by the working fluid, an expansion device (capillary tube, for example) which expands the working fluid, an evaporator, in which the working fluid is vaporized, withdrawing heat from the environment to be cooled, as well as pipes which fluidly connect said devices and define a circuit.

In some refrigeration systems, the expansion device - or capillary tube - is sized for a fixed capacity of the compressor and for a condition of better performance at a single ambient temperature. With the variation of the ambient temperature and/or the internal load of the system, this performance is impaired. In refrigeration systems using variable capacity compressors this problem is even more relevant, since the capillary tube is sized to the maximum capacity of the compressor, and when it works in low capacity the capillary tube has a higher flow than the compressor pumps, causing the efficiency of the system to be reduced.

More specifically, to avoid this problem, some solutions already describe the use of valves that control the flow of coolant fluid within the refrigeration system. One of these solutions is disclosed in the document PI 06012981. Said document describes, in a conceptual manner, a system and method of flow control in refrigeration circuits comprising a hermetic compressor fluidly connected to a closed circuit comprising condenser, evaporator and a fluid expansion device, wherein said fluid expansion device has a nominal expansion capacity and it is positioned between the evaporator and the condenser, and wherein the closed circuit also comprises a nominal capacity of circuit flow. Further, said system comprises a flow control valve which is positioned between an outlet of the condenser and an inlet of the fluid expansion device, wherein the flow control valve is modulated so that the fluid passing through the expansion device of is always substantially in nominal expansion capacity.

Thus, and in view of all of the aforementioned, although the solutions described above prove to be functional for the purposes for which they were made feasible, it is noted that there is still a gap in the state of the art with regard to the provision of a solenoid-controllable flow control valve which is reliable, fast switching, low power consumption, high durability, in a compact and inexpensive arrangement, which is also capable of make feasible the concept of the solution described in the document PI 06012981.

It is from this scenario that the present invention arises.

### Objectives of the Invention

Thus, it is the principal objective of the present invention to disclose a solenoid valve assembly for flow control which is reliable, has high durability and, mainly, has low power consumption.

It is also an objective of the present invention to provide a compact and inexpensive solenoid valve assembly.

It is further an objective of the present invention to disclose a solution which is capable of altering the air gap of the solenoid valve assembly in order to define an optimal path for the generated magnetic flux.

Another objective is to describe a simple, inexpensive and high durability solution that is feasible for various applications, including in high efficiency refrigeration systems.

### Summary of the Invention

The objectives summarized above are fully achieved by means of a solenoid valve assembly for flow control, said solenoid valve assembly including: a main body and a secondary body, a coil arranged within the main body, at least one inlet path and at least one outlet path, a valve seat physically associated to the main body and to the secondary body, in order to perform the interface between these, said valve seat, in combination with at least the secondary body, defining an airtight chamber.

The at least one movable member is arranged within the airtight chamber and it comprises at least one ferromagnetic portion, so as to be attracted or repelled as a function of the magnetic field generated by the coil, so that the movable member is able to move.

Said at least one inlet path communicates with the airtight chamber by at least one inlet opening and said at least one movable member is cooperative with the at least one inlet opening in order to open or close it.

The main body defines an open chamber that is longitudinally spaced from the airtight chamber.

Particularly, according to the present invention, said valve seat comprises a lower wall including a magnetic conducting portion and a magnetic barrier portion, said magnetic barrier portion being able to deflect the magnetic flux that passes through the lower wall of the valve seat towards the movable member.

Preferably, the inlet path is defined in a tubular body that is physically associated to the main body and to the valve seat.

Also, preferably, the magnetic barrier portion is a metallic ring, made of non-ferrous material and, more specifically, of stainless steel. Alternatively, the magnetic barrier portion is an air ring.

According to the present invention, when the coil is de-energized, the movable member is spaced from the inlet opening, so as to maintain fluid communication between the inlet path and the airtight chamber.

The movable member includes a lower face that is capable of sealing the inlet opening and an upper face which is preferably associated with at least one return spring, said at least one return spring being a flat spring or a bundle of flat springs.

Said return spring is seated against a stop defined in a flange portion of the secondary body.

The movable member comprises a discoid body. Furthermore, said movable member further comprises at least one through-hole radially spaced from the at least one inlet path.

In addition, the present invention also refers to a refrigeration system comprising a solenoid valve assembly for flow control, the refrigeration system including at least one compressor, at least one condenser, at least one expansion device, at least one evaporator, a closed circuit which fluidly and sequentially communicates the at least one compressor, the at least one condenser, the at least one expansion device and the at least one evaporator.

Said at least one expansion device comprises a respective nominal expansion capacity and it is positioned between the at least one condenser and the at least one evaporator.

The compressor provides a flow of fluid along the closed circuit, wherein the closed circuit comprises a nominal capacity of circuit flow.

The solenoid valve assembly for flow control is positioned between an outlet of the at least one condenser and an inlet of the at least one expansion device, said solenoid valve assembly being modulated so that the fluid passing through the expansion device is equivalent to the nominal expansion capacity, wherein the solenoid valve assembly for flow control is defined as above.

### Brief Description of the Drawings

The present invention will be described in detail on the basis of the illustrative figures listed below, wherein:
Figure 1 illustrates a longitudinal cross-sectional view of a solenoid valve assembly according to the state of the art;
Figure 2 illustrates a longitudinal cross-sectional view of a solenoid valve assembly according to the preferred embodiment of the present invention;

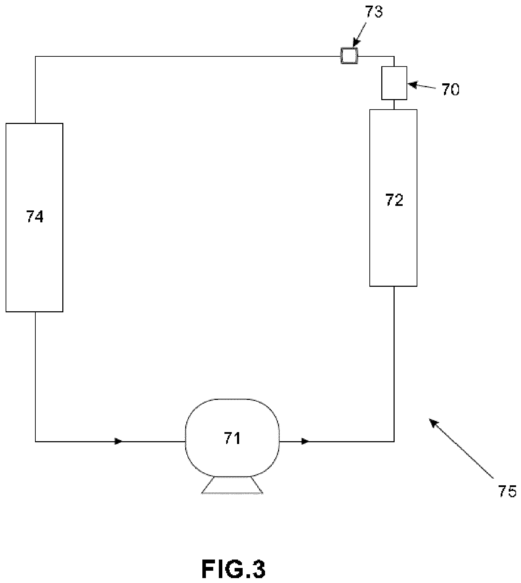

Figure 3 schematically illustrates a refrigeration system comprising a solenoid valve assembly in accordance with the present invention.

### Detailed Description of the Invention

According to the central objectives of the invention in question, it is disclosed a solenoid valve assembly **70** for flow control, which includes a main body **10** defining an open chamber **13** and housing, in its interior, a coil **30,** a secondary body **20** which is longitudinally spaced from the main body **10,** as well as a valve seat **40** physically associated to the main body **10** and to the secondary body **20**, simultaneously, in order to perform the interface between these, said valve seat **40**, in combination with at least the secondary body **20**, defining an airtight chamber **41** which, obviously, is also longitudinally spaced from the open chamber **13**.

The airtight chamber **41** is so named to differentiate it from the open chamber **13** - into which the coil **30** is housed - which is defined by the main body **10**. Airtight chambers, such as that of the solenoid valve assembly **70** of the present invention, also are already known so that their functionality need not be described in detail. In turn, the open chamber **13** is so named, since it is not necessarily airtight.

It is worth mentioning, however, that said airtight chamber **41** has an important pressure equalizing function, as will be further detailed below.

Inside said airtight chamber **41**, it is arranged at least one movable member **42**, preferably in discoid shape, which regulates the passage of fluid from at least one inlet path **11** to at least one outlet path **21** through its movement. More specifically, said inlet path **11** communicates with the airtight chamber **41** through at least one inlet opening **12**, and the airtight chamber **41** in turn communicates with the outlet path **21** by a plurality of through-holes **43** defined on the movable member **42** and circumferentially spaced from each other.

The at least one movable member **42** cooperates with the at least one inlet opening **12** so as to open or close it upon its attraction or repulsion, as a function of the magnetic field generated by the coil **30**, since said movable member **42** comprises at least one ferromagnetic portion.

More specifically, the movable member **42** includes a lower face **421** and an upper face **422**, the lower face **421** being that able to seat against the valve seat **40** so as to seal the inlet opening **12**. In addition, the stroke of said movable member **42** is, therefore, provided from a lower wall **45** of the valve seat **40** to a flange portion **23** of the secondary body **20**.

According to the preferred embodiment of the present invention, when the coil **30** is energized, the movable member **42** is attracted and seals the inlet opening **12**, and when the coil **30** is de-energized, the movable member **42** is moved by simple pressure differential, that is, by the fluid force itself from the inlet path **11**, and rests against the flange portion **23** of the secondary body **20**. In this situation wherein the coil **30** is de-energized, the movable member **42** is spaced from the inlet opening **12** so as to maintain fluid communication between the inlet path **11** and the airtight chamber **41**, this being, therefore, its "only stable position".

A person skilled in the art will also appreciate that, alternatively, the design of the solenoid valve assembly **70** could be adapted to provide the only stable position of the movable member **42** in a closing condition of the inlet opening **12**, when the coil **30** was de-energized.

The advantage of having the only stable position of the movable member **42** in an opening condition of the inlet opening **12** is that, in a situation of failure of the solenoid valve assembly **70**, the fluid passage would not cease and the upstream pressure of the movable member **42** would not raise too much, so that the integrity of the assembly, despite the failure, would still be maintained.

Particularly, according to the present invention, said valve seat **40** comprises a lower wall **45** which rests against the main body **10**, either in a side wall **15** of the latter or in some flange extending therefrom. The lower wall **45** of the valve seat **40** includes a magnetic conducting portion **451** and a magnetic barrier portion **452**, said magnetic barrier portion **452** being able to deflect the magnetic flux that passes through the lower wall **45** of the valve seat **40** in the direction of the movable member **42**, so that said magnetic flux passes through said movable member **42**.

In this way, the air gap of the solenoid valve assembly **70** is changed so that, for a same electric current passing through the coil **30**, that is, for a same power consumption, there is an "optimal" magnetic flux path and capable of attracting/repelling the movable member **42** with greater efficiency (intensity, speed) and reliability.

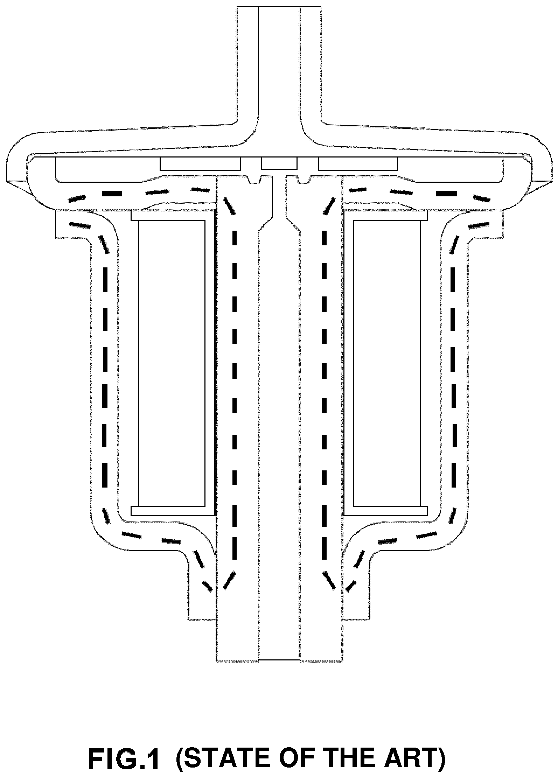

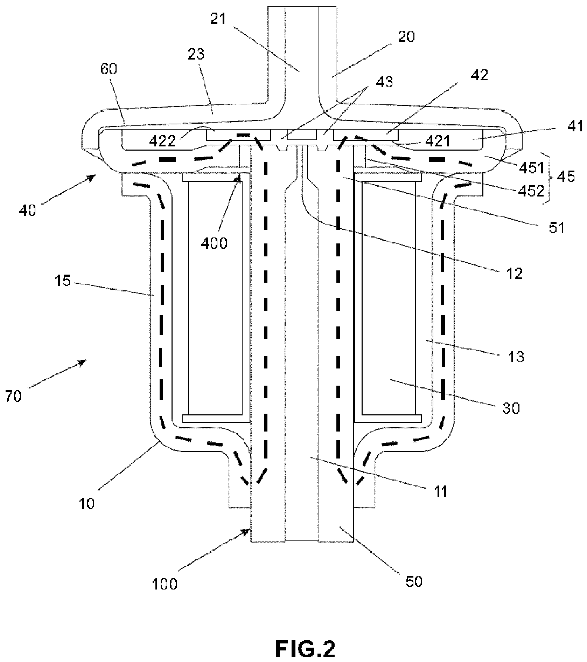

In this regard, and by way of comparison, it is pointed out that if the magnetic barrier portion **452** were not provided, the magnetic flux would travel a path as shown in dashed lines in Figure 1. On the other hand, with the provision of said magnetic barrier portion **452** adjacent to the valve seat **40**, the magnetic flux travels along a path as shown in dashed lines in Figure 2.

Thus, it is highlighted that the provision of the magnetic barrier portion **452** is indispensable for the solenoid valve assembly **70** in accordance with the described arrangement, since the movable member **42** is longitudinally spaced - and substantially distant - from the main body and the coil **30**.

According to the preferred embodiment of the present invention, the main body **10** has a cup shape, with a first hole **100** at its lower end which receives a tubular body **50**, which defines the inlet path **11**.

Preferably, the valve seat **40** also has a shape analogous to a cup, comprising a second hole **400** in its lower wall **45** so as to receive the upper end **51** of the tubular body **50**.

Also, in a preferred manner, the secondary body **20** comprises a tubular shape including the flange portions **23** at its lower end so as to engage the valve seat **40**, and also to define the stroke end of the movable member **42**.

Thus, as can be seen from Figure 2, according to the preferred embodiment of the present invention, the main body **10**, the tubular body **50**, the valve seat **40** and the secondary body **20** are axially aligned with each other.

Preferably, the magnetic barrier portion **452** defined in the valve seat **40** is a metallic ring, made of non-ferrous material. Alternatively, it may be an air ring. Another possibility, instead of a ring, would be possible the provision of arcuate segments circumferentially spaced from one another. In the case of choice of metallic material, a good option is the use of stainless steel due to its low magnetic permeability, low cost and ease of working (ductility, for example).

Further, and also in the case wherein the magnetic barrier portion **452** is a metallic ring, it is foreseen that said metallic ring has a thickness substantially equivalent to that of the lower wall **45**, so that it is arranged adjacent thereto in such a way as to provide an extension thereof, in the region of the second hole **400**.

Thus, in view of the above-described preferred features of the present invention, it will be appreciated that the airtight chamber **41** is finally defined by the valve seat **40**, including its magnetic conducting portion **451** and its magnetic barrier portion **452**, by the secondary body **20**, as well as by the upper end **51** of the tubular body **50**.

Preferably, the upper face **422** of the movable member **42** is associated with at least one return spring **60**, of the flat spring type or the bundle of flat springs. Said return spring **60** is, preferably, seated against the flange portion **23** of the secondary body **20**, adjacent the airtight chamber **41**.

Obviously, in the case of the return spring **60** being a flat spring or bundle of flat springs associated with the upper face **422** of the movable member, said return spring **60** should have cooperating through-holes (not illustrated), that is, aligned with the through-holes **43** of the movable member **42** to ensure fluid communication between the airtight chamber **41** and the outlet path **21**.

In this way, that is, with the magnetic barrier portion **452** defining part of the lower wall **45** itself of the valve seat **40**, the return spring **60** being of the flat type or bundle of flat springs, and their arrangement occurring adjacent to the airtight chamber **41** - and not being a helical spring arranged within the open chamber **13** defined by the main body **10**, the present invention, in addition to achieving the objectives for which it is proposed, related to reliability, fast actuation and low power consumption, for example, it still provides a compact arrangement, able to be used in a variety of applications, including inside refrigeration compressors.

Thus, it is noted that neither the movable member **42** nor the magnetic barrier portion **452** nor the return spring **60** are arranged in the region surrounding or surrounded by the coil **30** or by the main body **10** housing said coil **30**. In other words, both the movable member **42**, the magnetic barrier portion **452** and the return spring **60** are arranged longitudinally spaced from the main body **10** and the coil **30**.

It is further highlighted that, in a preferred manner, said through-hole **43** defined in the movable member **42** are radially spaced from the at least one inlet path **11**.

As mentioned, said through-holes **43** provide fluid communication between the airtight chamber **41** and the outlet path **21**, so that, in addition to being functional during normal operation in the solenoid valve assembly **70**, they also show functional for pressure equalizing when it rises too much and unduly in the outlet path **21** in relation to the inlet path **11**.

That is, if the downstream pressure of the movable member **42** is greater than the upstream pressure of the movable member **42**, said movable member **42** could be forced to remain closed, inclusively overcoming the return force provided by return spring **60**, a fact which is not desired, as mentioned above. Thus, said through-holes **43** allow the reflow of fluid from the outlet path **21** to the airtight chamber **41**, however, since they are out of alignment - or radially spaced - from the inlet path **11**, they do not considerably impair the flow of fluid therefrom.

Therefore, according to the features disclosed herein, the solenoid valve assembly **70** for flow control of the present invention is suitable for a variety of applications, including refrigeration compressors that require fast switching of the valve and a high number of switching cycles.

In addition, the proposed solenoid valve assembly **70** is also suitable for flow control in a high efficiency refrigeration system, such as that described in the document PI 06012981.

That is, it is also envisaged that a refrigeration system comprising a compressor **71** (preferably of the variable speed and/or multiple suction type), a condenser **72**, an expansion device **73**, an evaporator **74**, an closed circuit **75** which fluidly and sequentially communicates the compressor **71**, the condenser **72**, the expansion device **73** and the evaporator **74**, said expansion device **73** being positioned between the evaporator **74** and the condenser **72**, may also comprise a solenoid valve assembly **70** for flow control, as that described, arranged between an outlet of the condenser **72** and an inlet of the expansion device **73**.

Thus, since the expansion device **73** comprises a respective nominal expansion capacity and since the compressor **71** provides a flow of fluid along the closed circuit **75** comprising a nominal capacity of circuit flow, said solenoid valve assembly **70** can be modulated so that the fluid passing through the expansion device **73** is equivalent to the nominal expansion capacity. Therefore, even when the compressor **71** is operating at low capacity (low speed), the efficiency of the expansion device **73** can still be maintained, and consequently the efficiency of the refrigeration system as a whole.

It is important to emphasize that the above description has the sole objective of describing, in an exemplary manner, the particular embodiment of the invention in question. Therefore, it is clear that modifications, variations and constructive combinations of the elements that perform the same function substantially in the same manner to achieve the same results, remain within the scope of protection defined by the appended claims.

## Claims

1. Solenoid valve assembly for flow control, said solenoid valve assembly (70) including:
a main body (10) and a secondary body (20);
a coil (30) arranged within the main body (10);
at least one inlet path (11) and at least one outlet path (21);
a valve seat (40) physically associated to the main body (10) and to the secondary body (20), in order to perform the interface between these, said valve seat (40), in combination with at least the secondary body (20), defining an airtight chamber (41);
at least one movable member (42) arranged within the airtight chamber (41);
said at least one movable member (42) comprising at least one ferromagnetic portion, so as to be attracted or repelled as a function of the magnetic field generated by the coil (30), so that the movable member (42) is able to move;
said at least one inlet path (11) communicating with the airtight chamber (41) by at least one inlet opening (12);
said at least one movable member (42) being co-operative with the at least one inlet opening (12) in order to open or close it;
said solenoid valve assembly **CHARACTERIZED by** the fact that:
said valve seat (40) comprises a lower wall (45) including a magnetic conducting portion (451) and a magnetic barrier portion (452);
said magnetic barrier portion being able to deflect the magnetic flux that passes through the lower wall (45) of the valve seat (40) towards the movable member (42).

2. Solenoid valve assembly for flow control, according to claim 1, **CHARACTERIZED by** the fact that the main body (10) defines an open chamber (13).

3. Solenoid valve assembly for flow control, according to claim 2, **CHARACTERIZED by** the fact that the airtight chamber (41) is longitudinally spaced from the open chamber (13) defined by the main body (10).

4. Solenoid valve assembly for flow control, according to claim 1, **CHARACTERIZED by** the fact that the inlet path (11) is defined in a tubular body (50) that is physically associated to the main body (10) and to the valve seat (40).

5. Solenoid valve assembly for flow control, according to claim 1, **CHARACTERIZED by** the fact that the magnetic barrier portion (452) is a metallic ring, made of non-ferrous material.

6. Solenoid valve assembly for flow control, according to claim 1, **CHARACTERIZED by** the fact that the magnetic barrier portion (452) is an air ring.

7. Solenoid valve assembly for flow control, according to claim 5, **CHARACTERIZED by** the fact that the metallic ring is made of stainless steel.

8. Solenoid valve assembly for flow control, according to claim 1, **CHARACTERIZED by** the fact that when the coil (30) is de-energized, the movable member (42) is spaced from the inlet opening (12), so as to maintain fluid communication between the inlet path (11) and the airtight chamber (41).

9. Solenoid valve assembly for flow control, according to claim 1, **CHARACTERIZED by** the fact that the movable member (42) includes a lower face (421) that is able to seal the inlet opening (12) and an upper face (422) which is associated with at least one return spring (60).

10. Solenoid valve assembly for flow control, according to claim 9, **CHARACTERIZED by** the fact that the at least one return spring (60) is a flat spring or a bundle of flat springs.

11. Solenoid valve assembly for flow control, according to claim 8, **CHARACTERIZED by** the fact that the return spring (60) is seated against a flange portion (23) of the secondary body (20).

12. Solenoid valve assembly for flow control, according to claim 1, **CHARACTERIZED by** the fact that the movable member (42) comprises a discoid body.

13. Solenoid valve assembly for flow control, according to claim 1, **CHARACTERIZED by** the fact that the movable member (42) comprises at least one through-hole (43), radially spaced from the at least one inlet path (11).

14. Refrigeration system comprising a solenoid valve assembly (70) for flow control, the refrigeration system including:
at least one compressor (71);
at least one condenser (72);
at least one expansion device (73);
at least one evaporator (74);
a closed circuit (75) which fluidly and sequentially communicates the at least one compressor (71), the at least one condenser (72), the at least one expansion device (73) and the at least one evaporator (74);
the at least one expansion device (73) comprising a respective nominal expansion capacity and being positioned between the at least one condenser (72) and the at least one evaporator (74);
the compressor (71) providing a flow of fluid along the closed circuit (75), wherein the closed circuit (75) comprises a nominal capacity of circuit flow;
the solenoid valve assembly (70) for flow control being positioned between an outlet of the at least one condenser (72) and an inlet of the at least one expansion device (73);
the solenoid valve assembly (70) for flow control being modulated so that the fluid passing through the expansion device (73) is equivalent to the nominal expansion capacity;
said refrigeration system being **CHARACTERIZED by** the fact that the solenoid valve assembly (70) for flow control is defined according to claims 1 to 13.
